# EUROPEAN PATENT APPLICATION

(11) **EP 3 531 599 A1**
(43) Date of publication of application: **28.08.2019**
(21) Application number: 16920480.7
(22) Date of filing: 04.11.2016
(51) Int. Cl.: H04L 1/16, H04L 1/18

(54) **HARQ-ACK FEEDBACK INFORMATION TRANSMISSION METHOD AND RELATED APPARATUS**

(71) Applicant: Huawei Technologies Co., Ltd., Longgang District Shenzhen, Guangdong 518129 (CN)
(72) Inventor: LUO, Zhihu, Shenzhen Guangdong 518129 (CN); WU, Yiling, Shenzhen Guangdong 518129 (CN)
(74) Representative: Pfenning, Meinig & Partner mbB
(86) International application number: PCT/CN2016/104774
(87) International publication number: WO 2018/082059

(57) **Abstract**

This application relates to the field of communications technologies, and in particular, to a HARQ-ACK feedback information transmission technology. A HARQ-ACK feedback information transmission method includes: obtaining, by a terminal device, downlink HARQ-ACK feedback information for each of a plurality of HARQ processes; and transmitting, by the terminal device, the plurality of pieces of downlink HARQ-ACK feedback information for the plurality of HARQ processes on a same time-frequency resource simultaneously. According to the solution provided in embodiments of this application, the downlink HARQ-ACK feedback information for the plurality of HARQ processes is transmitted on the same time-frequency resource simultaneously, so that a quantity of times that the terminal device feeds back the downlink HARQ-ACK feedback information and occupation of uplink time-frequency resources by the plurality of downlink HARQ processes are greatly reduced, thereby reducing power consumption of the terminal device.

## Description

### TECHNICAL FIELD

The present invention relates to the field of communications technologies, and in particular, to a HARQ-ACK feedback information transmission technology.

### BACKGROUND

In a communications system, error control may be performed by using a hybrid automatic repeat request (HARQ, Hybrid Automatic Repeat Request) method.

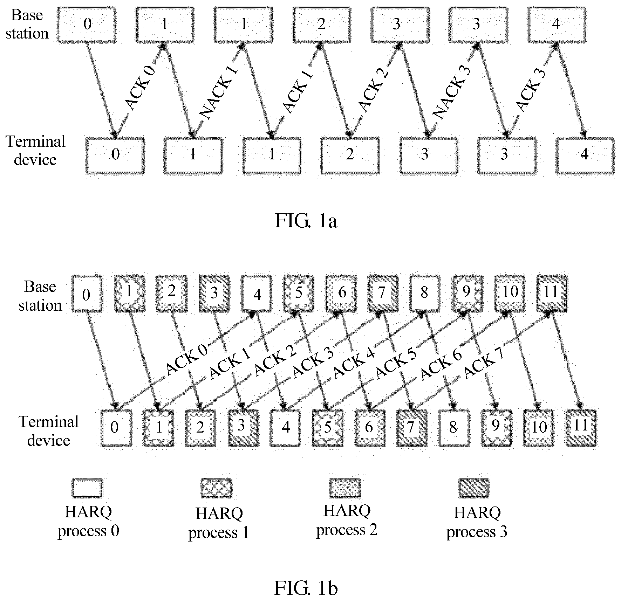

Data is sent by using a stop and wait mechanism in a downlink HARQ. Referring to FIG. la, after sending a data packet (0 to 4 in FIG. 1a are data packet identifiers), a base station device stops and waits for downlink HARQ-ACK feedback information (an ACK or a NACK) from a terminal device. The base station device sends a data packet after receiving the feedback information from the terminal device. For example, the base station sends a data packet 0, and then stops and waits for downlink HARQ-ACK feedback information (namely, an ACK 0 in FIG. 1a) that is fed back by the terminal device for the data packet 0; and sends a data packet 1 after receiving the ACK 0.

The base station needs to stop and wait for downlink HARQ-ACK feedback information after each time of data packet transmission; and a channel is idle during waiting for an acknowledgement, and no data is sent. Consequently, the foregoing manner results in a very low throughput.

To improve channel utilization and increase a throughput, a plurality of concurrent HARQ processes are used in an LTE (Long Term Evolution, Long Term Evolution) system, and the foregoing stop and wait mechanism is used in each HARQ process. However, when downlink HARQ-ACK feedback information for a HARQ process is waited for in the process, the base station may continue to send a data packet by using another HARQ process. FIG. 1b is an example diagram of four HARQ processes. Using a HARQ process 0 as an example, during waiting for downlink HARQ-ACK feedback information (an ACK 0) for the HARQ process 0, a data packet is sent in another HARQ process.

On some occasions, the terminal device is required to reduce uplink resource occupation. Therefore, how to reduce uplink resources occupied by a plurality of downlink HARQ processes has become a research and development trend.

### SUMMARY

In view of this, an objective of embodiments of the present invention is to provide a HARQ-ACK feedback information transmission method and a related apparatus, to reduce uplink resources occupied by a plurality of downlink HARQ processes.

To achieve the foregoing objective, the embodiments of the present invention provide the following technical solutions:

According to an aspect, an embodiment of this application provides a HARQ-ACK feedback information transmission method. The method is applied to a scenario of a plurality of downlink HARQ processes, and the method includes: obtaining, by a terminal device, downlink HARQ-ACK feedback information for each of the plurality of HARQ processes, and transmitting the plurality of pieces of downlink HARQ-ACK feedback information (for the plurality of HARQ processes) on a same time-frequency resource simultaneously; and receiving, by a base station, the plurality of pieces of downlink HARQ-ACK feedback information on the same time-frequency resource simultaneously. In an existing HARQ-ACK feedback information transmission process, downlink HARQ-ACK feedback information for each HARQ-ACK process is transmitted on a time-frequency resource independently, and when there are a plurality of HARQ processes, a plurality of pieces of HARQ-ACK feedback information are transmitted on different time-frequency resources, causing a waste of resources. In the solution provided in the present invention, the downlink HARQ-ACK feedback information for the plurality of HARQ processes is transmitted on the same time-frequency resource simultaneously, so that a quantity of times that the terminal device feeds back the downlink HARQ-ACK feedback information and occupation of uplink time-frequency resources by the plurality of downlink HARQ processes can be greatly reduced, thereby reducing power consumption of the terminal device.

In a possible design, before the step of obtaining, by a terminal device, downlink HARQ-ACK feedback information for each of the plurality of HARQ processes, the method may further include the following interaction steps: The base station sends downlink DCI for each of the plurality of HARQ processes to the terminal device; and the terminal device monitors to the downlink DCI for each HARQ process, where DCI corresponding to an i^{th} HARQ process includes an index number of the i^{th} HARQ process and time-frequency resource scheduling information corresponding to the index number; the time-frequency resource scheduling information is used to indicate a time-frequency resource for transmitting downlink HARQ-ACK feedback information for the i^{th} HARQ process; and the same time-frequency resource is determined based on time-frequency resources for transmitting the downlink HARQ-ACK feedback information for the HARQ processes. If DCI for a HARQ process is lost, the terminal device may determine downlink HARQ-ACK feedback information corresponding to the HARQ process as a NACK; or if DCI for all HARQ processes is lost, the terminal device cannot learn of a time-frequency resource for transmitting downlink HARQ-ACK feedback information for any HARQ process, and the terminal device performs no transmission operation. In this embodiment of the present invention, the DCI for the plurality of HARQ processes is sent separately. This follows an existing sending manner of DCI for a plurality of HARQ processes. In addition, the time-frequency resource for transmitting the downlink HARQ-ACK feedback information for the plurality of HARQ processes simultaneously is determined based on time-frequency resource scheduling information in each piece of DCI. Based on this, a specific manner of determining the time-frequency resource for transmitting the downlink HARQ-ACK feedback information for the plurality of HARQ processes simultaneously is provided.

In a possible design, before the step of obtaining, by a terminal device, downlink HARQ-ACK feedback information for each of the plurality of HARQ processes, the method may further include the following interaction steps: The base station sends, to the terminal device, DCI shared by the plurality of HARQ processes; and the terminal device monitors to the DCI shared by the plurality of HARQ processes, where the shared DCI carries an index number of each of the plurality of HARQ processes and time-frequency resource scheduling information corresponding to the index number; or the shared DCI carries time-frequency resource scheduling information corresponding to each of the plurality of HARQ processes and a start index number of the plurality of HARQ processes, and the start index number corresponds to one of the HARQ processes; time-frequency resource scheduling information corresponding to an i^{th} HARQ process is used to indicate a time-frequency resource for transmitting downlink HARQ-ACK feedback information for the i^{th} HARQ process; and the same time-frequency resource is determined based on time-frequency resources for transmitting the downlink HARQ-ACK feedback information for the HARQ processes. In this embodiment, the time-frequency resource scheduling information for the plurality of HARQ processes is carried by using the DCI. In this way, resources occupied for sending the time-frequency resource scheduling information for the plurality of HARQ processes can be reduced.

In a possible design, the same time-frequency resource is determined in the following manner: selecting a frequency domain resource position for transmitting downlink HARQ-ACK feedback information for a first target HARQ process, as a frequency domain resource position of the same time-frequency resource; and selecting a time domain resource position for transmitting downlink HARQ-ACK feedback information for a second target HARQ process, as a time domain resource position of the same time-frequency resource, where the first target HARQ process and the second target HARQ process are HARQ processes in the plurality of HARQ processes; and the first target HARQ process and the second target HARQ process are different HARQ processes, or the first target HARQ process and the second target HARQ process are a same HARQ process.

In a possible design, the base station may send a simultaneous transmission configuration indication to the terminal device, to instruct to transmit the plurality of pieces of downlink HARQ-ACK feedback information for the plurality of HARQ processes on the same time-frequency resource simultaneously; and subsequently, the terminal device transmits the plurality of pieces of downlink HARQ-ACK feedback information for the plurality of HARQ processes on the same time-frequency resource simultaneously. In addition, the base station may send a non-simultaneous transmission configuration indication to the terminal device, to instruct not to transmit the plurality of pieces of downlink HARQ-ACK feedback information for the plurality of HARQ processes on the same time-frequency resource simultaneously; and subsequently, the terminal device feeds back the downlink HARQ-ACK feedback information on a time-frequency resource, for transmitting the downlink HARQ-ACK feedback information, that is specified by the DCI for each HARQ process. In this way, the base station can flexibly configure, based on a coverage status of the terminal device (or in consideration of another condition), whether to perform simultaneous transmission at a same time-frequency resource position. For example, for a terminal device in good coverage, the base station may send a simultaneous transmission configuration indication to the terminal device, to configure simultaneous transmission of downlink HARQ-ACK feedback information for a plurality of processes of the terminal device. For a terminal device in poor coverage, the base station may send a non-simultaneous transmission configuration indication to the terminal device, to configure separate transmission of downlink HARQ-ACK feedback information for a plurality of processes of the terminal device. More specifically, the simultaneous transmission configuration indication or the non-simultaneous transmission configuration indication may be carried by using one or more pieces of Radio Link Control RRC common signaling, RRC specific signaling, Media Access Control MAC control element CE signaling, or physical layer control information DCI. Using the DCI as an example, the simultaneous transmission configuration indication may be carried by using the foregoing shared downlink DCI, or may be carried by using independent downlink DCI for each HARQ process. The simultaneous transmission configuration indication is carried by using the DCI, to occupy no additional time-frequency resources.

In a possible design, when transmitting the plurality of pieces of downlink HARQ-ACK feedback information on the same time-frequency resource simultaneously, the terminal device may specifically perform the following operations: modulating the plurality of pieces of downlink HARQ-ACK feedback information, to obtain a modulation symbol; and transmitting the modulation symbol on the same time-frequency resource. In an example, using two downlink HARQ processes as an example, the base station may modulate downlink HARQ-ACK feedback information for each HARQ process by using a modulation scheme of QPSK/binary ASK/binary FSK, to obtain one QPSK/binary ASK/binary FSK symbol, and transmit the QPSK/binary ASK/binary FSK symbol based on time-frequency resource scheduling information corresponding to the process. In this embodiment, the plurality of pieces of downlink HARQ-ACK feedback information are modulated to obtain the modulation symbol, so that a total time of sending the downlink HARQ-ACK feedback information can be reduced, and power consumption and a power loss can be reduced with the reduction of the total time, thereby reducing a quantity of times that the terminal device feeds back the downlink HARQ-ACK feedback information, and further reducing power consumption and a power loss of the terminal device.

In a possible design, the plurality of pieces of downlink HARQ-ACK feedback information are sorted according to a preset arrangement rule. A person skilled in the art may flexibly design the preset arrangement rule as required. For example, the preset arrangement rule may be designed to include: performing arrangement in ascending order or descending order of the index numbers of the HARQ processes. Alternatively, the preset arrangement rule may be set to include: performing arrangement in any one of full permutations of the index numbers of the HARQ processes. Alternatively, the preset arrangement rule may be set to include: performing arrangement based on parity of the index numbers of the HARQ processes, where an odd number is ranked before or after an even number, and the like.

According to another aspect, an embodiment of the present invention provides a terminal device. The terminal device has a function of implementing behavior of the terminal device in the foregoing method design. The function may be implemented by using hardware, or may be implemented by executing corresponding software by hardware. The hardware or the software includes one or more modules corresponding to the foregoing function.

In a possible design, a structure of the terminal device includes a processor and a memory. The processor runs a software program stored in the memory and invokes data stored in the memory to perform the foregoing method.

According to still another aspect, an embodiment of the present invention provides a base station. The base station has a function of implementing behavior of the base station in the foregoing method design. The function may be implemented by using hardware, or may be implemented by executing corresponding software by hardware. The hardware or the software includes one or more modules corresponding to the foregoing function.

In a possible design, a structure of the base station includes a processor and a memory. The processor runs a software program stored in the memory and invokes data stored in the memory to perform the foregoing method.

According to yet another aspect, an embodiment of the present invention provides a computer storage medium, configured to store a computer software instruction used by the foregoing terminal device, and including a program designed to perform the foregoing aspects.

According to yet another aspect, an embodiment of the present invention provides a computer storage medium, configured to store a computer software instruction used by the foregoing base station, and including a program designed to perform the foregoing aspects.

In the prior art, downlink HARQ-ACK feedback information for each HARQ-ACK process is transmitted on a time-frequency resource independently, and when there are a plurality of HARQ processes, a plurality of pieces of HARQ-ACK feedback information are transmitted on different time-frequency resources, causing a waste of resources.

However, according to the solution provided in the present invention, the downlink HARQ-ACK feedback information for the plurality of HARQ processes is transmitted on the same time-frequency resource simultaneously, so that a quantity of times that the terminal device feeds back the downlink HARQ-ACK feedback information and occupation of uplink time-frequency resources by the plurality of downlink HARQ processes are greatly reduced, thereby reducing power consumption of the terminal device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1a and FIG. 1b each are a schematic diagram of an existing transmission mode for downlink HARQ-ACK feedback information;
FIG. 2a and FIG. 2b each are a schematic diagram of an application scenario according to an embodiment of the present invention;
FIG. 3 and FIG. 10 each are an example schematic structural diagram of a terminal device according to an embodiment of the present invention;
FIG. 4 and FIG. 11 each are an example schematic structural diagram of a base station according to an embodiment of the present invention;
FIG. 5, FIG. 8, and FIG. 9 each are a schematic interaction flowchart of downlink ARQ-ACK feedback information transmission according to an embodiment of the present invention; and
FIG. 6 and FIG. 7 each are a schematic diagram of simultaneous transmission of a plurality of pieces of downlink ARQ-ACK feedback information on a same time-frequency resource according to an embodiment of the present invention.

### DESCRIPTION OF EMBODIMENTS

Embodiments of the present invention provide a HARQ-ACK feedback information transmission method and a related apparatus, to reduce uplink resources occupied by a plurality of downlink HARQ processes.

The related apparatus in the embodiments of the present invention includes a terminal device and a base station.

The terminal device and the base station are applicable to a Long Term Evolution (LTE) system or a Long Term Evolution-Advanced LTE-A (LTE Advanced) system. Certainly, the present invention is also applicable to another communications system, provided that there is an entity that can send information in the communications system, and there is also an entity that can receive information in the communications system.

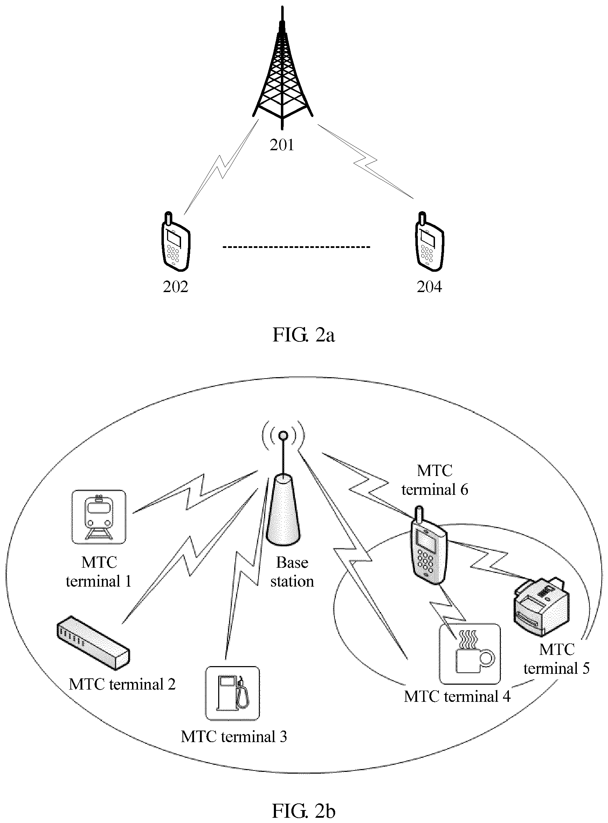

FIG. 2a provides an example application scenario of the terminal device and the base station. Abase station 201 communicates with any quantity of terminals similar to a terminal device 202 and a terminal device 204.

It should be noted that, FIG. 2a shows an example of two terminal devices. In an actual application scenario, a quantity of terminal devices is not limited to 2, and the quantity may be larger or smaller.

The terminal devices 202, 204, and the like may be various handheld devices having a wireless communication function, an in-vehicle device, a wearable device, a computing device, a positioning device, or another processing device connected to a wireless modem, user equipments (User Equipment, UE for short) in various forms, a mobile station (Mobile station, MS for short), a mobile phone, a tablet computer, a PDA (Personal Digital Assistant, personal digital assistant), a POS (Point of Sales, point of sales), an in-vehicle computer, or the like. In addition, the terminal device 202 or 204 may also be a device integrated with a sensor and a communications module, or the like, for example, a smoke alarm for triggering alarm information reporting, or a plant temperature measurement apparatus that can periodically report data, or a smart water and electricity meter.

The terminal device 202 or 204 or the like is mainly responsible for accessing the base station based on a synchronization, broadcast, or control signal of the base station, and receiving a message from the base station. In the solution provided in the present invention, in a HARQ-ACK feedback information transmission process, the terminal device 202 or 204 may obtain downlink HARQ-ACK feedback information for each of a plurality of HARQ processes, and transmit the plurality of pieces of downlink HARQ-ACK feedback information (for the plurality of HARQ processes) on a same time-frequency resource simultaneously. The plurality of HARQ processes may include two or more downlink HARQ processes.

The base station 201 is an apparatus deployed in a radio access network and configured to provide a wireless communication function for the terminal device 202 or 204 or the like, and may include various forms of macro base stations, micro base stations, relay nodes, access points, and the like. In systems using different radio access technologies, names of devices having a function of a base station may vary. For example, in an LTE network, the device is referred to as an evolved NodeB (evolved NodeB, eNB or eNodeB for short), in WCDMA (Wideband Code Division Multiple Access, Wideband Code Division Multiple Access), the device is referred to as a NodeB, and in GSM (Global System for Mobile Communications, Global System for Mobile Communications) and CDMA (Code Division Multiple Access, Code Division Multiple Access), the device is referred to as a BTS (Base Transceiver Station, base transceiver station). For ease of description, in this application, the foregoing apparatuses providing the wireless communication function for the terminal device are collectively referred to as a base station.

The base station may be responsible for receiving data, request information, and the like reported by each terminal, sending a synchronization, broadcast, or control signal to the terminal device, allocating a physical resource to the terminal device, scheduling the terminal device, or the like. In the HARQ-ACK feedback information transmission process, the base station may deliver DCI (downlink control information, downlink control information). In the solution provided in the present invention, the base station may receive, on the same time-frequency resource simultaneously, the plurality of pieces of downlink HARQ-ACK feedback information sent by the terminal device.

It should be noted that, in an existing HARQ-ACK feedback information transmission process, downlink HARQ-ACK feedback information for each HARQ-ACK process is transmitted on a time-frequency resource independently, and when there are a plurality of HARQ processes, a plurality of pieces of HARQ-ACK feedback information are transmitted on different time-frequency resources, causing a waste of resources.

However, according to the solution provided in the present invention, the downlink HARQ-ACK feedback information for the plurality of HARQ processes is transmitted on the same time-frequency resource simultaneously, so that a quantity of times that the terminal device feeds back the downlink HARQ-ACK feedback information and occupation of uplink time-frequency resources by the plurality of downlink HARQ processes can be greatly reduced, thereby reducing power consumption of the terminal device.

FIG. 2b provides another example application scenario of the terminal device and the base station: The terminal device and the base station are applicable to the Internet of Things (IoT, Internet of things). The application scenario is only an example used in the present invention. With development of technologies, the present invention includes but is not limited to the application scenario. Simultaneous transmission of downlink HARQ-ACK feedback information for a plurality of HARQ processes on a same time-frequency resource shall fall within the protection scope of the embodiments of the present invention.

Typical Internet of Things applications include possible applications in various aspects such as a smart grid, intelligent agriculture, intelligent transportation, smart home, and environment monitoring.

In the Internet of Things, Internet clients are extended to any items for information exchange and communication. Such a communication method is also referred to as machine type communication (Machine type communications, MTC), and a communications node is referred to as an MTC terminal, namely, the foregoing terminal device mentioned in FIG. 2a.

In FIG. 2b, a base station and an MTC terminal 1 to an MTC terminal 6 form a communications system. In the communications system, the base station sends information to one or more of the MTC terminal 1 to the MTC terminal 6.

In addition, the MTC terminal 4 to the MTC terminal 6 may also form a communications system. In the communications system, the MTC terminal 6 may directly send information to one or more of the MTC terminal 4 and the MTC terminal 5.

FIG. 2b shows an example of six terminal devices. In an actual application scenario, a quantity of terminal devices is not limited to 6, and the quantity may be larger or smaller. In addition, MTC terminals may form or not form a communications system.

The Internet of Things needs to be applied to a plurality of scenarios, for example, from an outdoor scenario to an indoor scenario, or from an above-ground scenario to an underground scenario. Therefore, there are many special requirements for an application scenario of the Internet of Things, for example, a requirement for low energy consumption. In most cases, an MTC terminal is powered by using a battery, and in many scenarios, the MTC terminal needs to have a service life of more than a decade without replacing a battery. This requires an MTC device to work with extremely low power consumption.

To meet these special requirements, the mobile communications standardization organization 3GPP (3rd Generation Partnership Project, 3rd Generation Partnership Project) in GERAN#62 approves a new research subject to study a method for supporting ultra low complexity and low cost Internet of Things in a cellular network, and in RAN#69, proposes an NB-IoT (Narrowband Internet of Things, narrowband Internet of Things) subject.

In an NB-IoT system, an NPDCCH (Narrowband Physical Downlink Control CHannel, narrowband physical downlink control channel) is a downlink control channel of the NB-IoT system, an NPDSCH (Narrowband Physical Downlink Shared CHannel, narrowband physical downlink shared channel) is a downlink data channel of the NB-IoT system, an NPUSCH (Narrowband Physical Uplink Shared CHannel, narrowband physical downlink shared channel) format 2 is a special format of an NB-IoT uplink data channel and is mainly used to carry a downlink HARQ-ACK, an NPUSCH format 1 is another format of an uplink data channel and is mainly used for uplink data transmission, and an NPRACH (Narrowband Physical Random Access CHannel, narrowband physical random access channel) is an uplink random access channel.

Certainly, an existing NB-IoT system supports only a single HARQ process. During subsequent evolution, to increase a peak rate and reduce a delay, introduction of a plurality of HARQ processes is not excluded. If a single HARQ process is still used, to be specific, downlink HARQ-ACK feedback information for each HARQ-ACK process is transmitted on a time-frequency resource independently, when there are a plurality of HARQ processes, a plurality of pieces of HARQ-ACK feedback information are transmitted on different time-frequency resources, causing a waste of resources and an energy loss.

However, according to the solution provided in the present invention, the downlink HARQ-ACK feedback information for the plurality of HARQ processes is transmitted on a same time-frequency resource simultaneously, so that a quantity of times that the terminal device feeds back the downlink HARQ-ACK feedback information and occupation of uplink time-frequency resources by the plurality of downlink HARQ processes can be greatly reduced, thereby reducing power consumption of the terminal device. To be specific, the solution provided in the present invention can support the terminal device and the base station in meeting a special requirement for the application scenario of the Internet of Things.

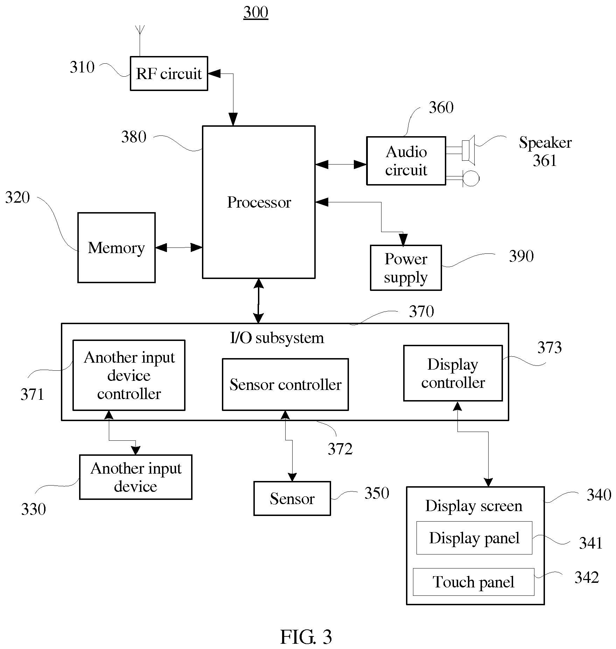

FIG. 3 is a block diagram of a partial structure of a terminal device 300 (namely, the terminal device 202 or 204 in FIG. 2a or any one of the MTC terminal 1 to the MTC terminal 6 in FIG. 2b) related to the embodiments of the present invention.

Referring to FIG. 3, the terminal device 300 includes components such as an RF (Radio Frequency, radio frequency) circuit 310, a memory 320, another input device 330, a display screen 340, a sensor 350, an audio circuit 360, an I/O subsystem 370, a processor 380, and a power supply 390. A person skilled in the art may understand that, the structure of the terminal device shown in FIG. 3 does not constitute a limitation on the terminal device, and the terminal device may include more or fewer components than those shown in the figure, or some components may be combined, or some components may be divided, or different component arrangements may be used. A person skilled in the art may understand that, the display screen 340 is a user interface (UI, User Interface), and the terminal device 300 may include more or fewer user interfaces than those shown in the figure.

The components of the terminal device 300 are described in detail below with reference to FIG. 3:

The RF circuit 310 may be configured to receive and send a signal in an information sending or receiving process or a call process. Particularly, the RF circuit 310 receives downlink information from a base station, then delivers the downlink information to the processor 380 for processing, and sends related uplink data to the base station. Generally, the RF circuit includes but is not limited to an antenna, at least one amplifier, a transceiver, a coupler, an LNA (Low Noise Amplifier, low noise amplifier), a duplexer, and the like. In addition, the RF circuit 310 may further communicate with a network and another device by wireless communication. The wireless communication may use any communication standard or protocol that includes but is not limited to a GSM (Global System for Mobile Communications, Global System for Mobile Communications), a GPRS (General Packet Radio Service, general packet radio service), CDMA (Code Division Multiple Access, Code Division Multiple Access), WCDMA (Wideband Code Division Multiple Access, Wideband Code Division Multiple Access), LTE (Long Term Evolution, Long Term Evolution), an email, an SMS (Short Message Service, short message service), and the like.

The memory 320 may be configured to store a software program and a module. The processor 380 runs the software program and the module stored in the memory 320, to implement various functional applications and data processing of the terminal device 300. The memory 320 may mainly include a program storage area and a data storage area. The program storage area may store an operating system, an application program required by at least one function (such as a sound playback function and an image display function), and the like. The data storage area may store data (such as audio data and an address book) created based on use of the terminal device 300, and the like. In addition, the memory 320 may include a high-speed random access memory, and may further include a non-volatile memory, for example, at least one disk storage device, a flash memory device, or another volatile solid-state storage device.

The another input device 330 may be configured to: receive input digit or character information, and generate a key signal input related to a user setting and function control of the terminal device 300. Specifically, the another input device 330 may include but is not limited to one or more of a physical keyboard, a functional key (such as a volume control key or an on/off key), a track ball, a mouse, a joystick, an optical mouse (the optical mouse is a touch-sensitive surface that displays no visual output, or an extension of a touch-sensitive surface formed by a touchscreen), or the like. The another input device 330 is connected to another input device controller 371 of the I/O subsystem 370, and exchanges a signal with the processor 380 under control of the another device input controller 371.

The display screen 340 may be configured to display information entered by the user or information provided for the user, and various menus of the terminal device 300, and may further accept user input. Specifically, the display screen 340 may include a display panel 341 and a touch panel 342. The display panel 341 may be configured in a form of an LCD (Liquid Crystal Display, liquid crystal display), an OLED (Organic Light-Emitting Diode, organic light-emitting diode), or the like. The touch panel 342 is also referred to as a touchscreen, a touch-sensitive panel, or the like, and may collect a touch operation or a non-touch operation of the user on or near the touch panel 342 (such as an operation of the user on or near the touch panel 342 by using any suitable object or accessory such as a finger or a stylus, which may also include a somatosensory operation, where the operation includes a single-point control operation, a multi-point control operation, or another operation type), and drive a corresponding connection apparatus based on a preset program. Optionally, the touch panel 342 may include two parts: a touch detection apparatus and a touch controller. The touch detection apparatus detects a touch position or a gesture of the user, and detects a signal generated by the touch operation, and transfers the signal to the touch controller. The touch controller receives the touch information from the touch detection apparatus, converts the touch information into information that can be processed by the processor, sends the information to the processor 380, and can receive and execute a command sent by the processor 380. In addition, the touch panel 342 may be implemented by using various types such as a resistive type, a capacitive type, an infrared type, and a surface sound wave type, or the touch panel 342 may be implemented by using any technology developed in future. Further, the touch panel 342 may cover the display panel 341, and the user may perform, based on content displayed by the display panel 341 (the displayed content includes but is not limited to a soft keyboard, a virtual mouse, a virtual key, an icon, and the like), an operation on or near the touch panel 342 covering the display panel 341. After detecting an operation on or near the touch panel 342, the touch panel 342 transfers the operation to the processor 380 by using the I/O subsystem 370 to determine user input, and then, the processor 380 provides corresponding visual output on the display panel 341 based on the user input by using the I/O subsystem 370. Although, in FIG. 3, the touch panel 342 and the display panel 341 are used as two independent parts to implement input and output functions of the terminal device 300, in some embodiments, the touch panel 342 and the display panel 341 may be integrated to implement the input and output functions of the terminal device 300.

The terminal device 300 may further include at least one sensor 350, such as an optical sensor, a motion sensor, and other sensors. Specifically, the optical sensor may include an ambient light sensor and a proximity sensor. The ambient light sensor may adjust luminance of the display panel 341 based on brightness of ambient light. The proximity sensor may switch off the display panel 341 and/or backlight when the terminal device 300 is moved to the ear. As one type of motion sensor, an accelerometer sensor may detect magnitude of accelerations in various directions (generally on three axes), may detect magnitude and a direction of the gravity when static, and may be applied to an application that recognizes a posture of a mobile phone (for example, switching between landscape orientation and portrait orientation, a related game, and magnetometer posture calibration), a function related to vibration recognition (such as a pedometer and a knock), and the like. For other sensors such as a gyroscope, a barometer, a hygrometer, a thermometer, and an infrared sensor that may be further configured for the terminal device 300, details are not described herein.

The audio circuit 360, a speaker 361, and a microphone 362 may provide an audio interface between the user and the terminal device 300. The audio circuit 360 may convert received audio data into a signal and transmit the signal to the speaker 361. The speaker 361 converts the signal into a sound signal for output. On the other hand, the microphone 362 converts a collected sound signal into a signal. The audio circuit 360 receives the signal and converts the signal into audio data, and outputs the audio data to the RF circuit 310 to send the audio data to another mobile phone or output the audio data to the memory 320 for further processing.

The I/O subsystem 370 is configured to control external input and output devices, and may include the another device input controller 371, a sensor controller 372, and a display controller 373. Optionally, one or more other device input controllers 371 receive a signal from the another input device 330 and/or send a signal to the another input device 330. The another input device 330 may include a physical button (such as a press button or a rocker button), a dial, a slide switch, a joystick, a click scroll wheel, and an optical mouse (the optical mouse is a touch-sensitive surface that displays no visual output, or an extension of a touch-sensitive surface formed by a touchscreen). It should be noted that, the another device input controller 371 may be connected to any one or more of the foregoing devices. The display controller 373 in the I/O subsystem 370 receives a signal from the display screen 340 and/or sends a signal to the display screen 340. After the display screen 340 detects user input, the display controller 373 converts the detected user input into interaction with a user interface object displayed on the display screen 340, to implement man-machine interaction. The sensor controller 372 may receive a signal from one or more sensors 350 and/or send a signal to one or more sensors 350.

The processor 380 is a control center of the terminal device 300, and is connected to various parts of the mobile phone by using various interfaces and lines. By running or executing the software program and/or the module stored in the memory 320, and invoking data stored in the memory 320, the processor 380 performs various functions and data processing of the terminal device 300, to perform overall monitoring on the mobile phone. Optionally, the processor 380 may include one or more processing units. Preferably, the processor 380 may integrate an application processor and a modem processor. The application processor mainly processes an operating system, a user interface, an application program, and the like. The modem processor mainly processes wireless communication. It may be understood that, the modem processor may not be integrated into the processor 380.

The terminal device 300 further includes the power supply 390 (such as a battery) that supplies power to each component. Preferably, the power supply may be logically connected to the processor 380 by using a power management system, thereby implementing functions such as charging, discharging, and power consumption management by using the power management system.

Although not shown, the terminal device 300 may further include a camera, a Bluetooth module, and the like. Details are not described herein.

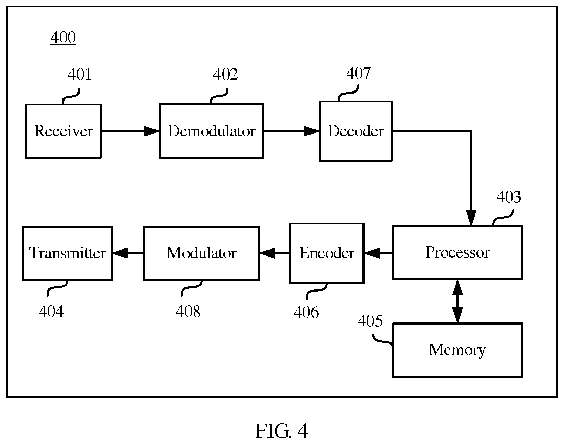

FIG. 4 is a block diagram of a partial structure of a base station 400 related to the embodiments of the present invention. The base station 400 may include at least a receiver 401, a processor 403, and a transmitter 404.

The receiver 401 is configured to: receive a signal from, for example, a receive antenna (not shown), perform a typical operation (for example, filtering, amplification, or down-conversion) on the received signal, and digitize an adjusted signal to obtain a sample. The receiver 401 may be, for example, an MMSE (minimum mean-square error, Minimum Mean-Square Error) receiver.

The transmitter 404 is configured to send a signal to, for example, a terminal device. The receiver 401 and the transmitter 404 may also be integrated during actual application, to form a transceiver (transceiver).

A demodulator 402 may be configured to demodulate received signals and provide the received signals to the processor 403.

The base station 400 may include a memory 405. The memory 405 is operatively coupled to the processor 403, and stores the following data: data to be sent, received data, and any other suitable information related to execution of various operations and functions in this specification.

The base station 400 may include a plurality of antenna groups, and each antenna group may include one or more antennas.

The base station 400 may additionally include a transmitter chain and a receiver chain, and a person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

The processor 403 may be a processor specifically used for analyzing information received by the receiver 401 and/or generating information to be sent by the transmitter 404, a processor configured to control one or more components of the base station 400, and/or a controller configured to: analyze a signal received by the receiver 404, generate information to be sent by the transmitter 401, and control one or more components of the base station 400.

Optionally, the processor 403 may include one or more processing units. Preferably, the processor 403 may integrate an application processor and a modem processor. The application processor mainly processes an operating system, a user interface, an application program, and the like. The modem processor mainly processes wireless communication. It may be understood that, the modem processor may not be integrated into the processor 403.

The embodiments of the present invention are further described in detail below based on the foregoing commonalities of the present invention.

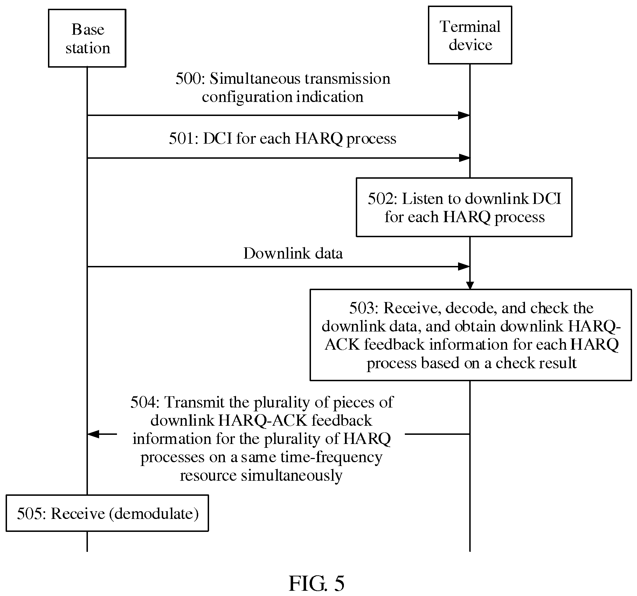

FIG. 5 is an example schematic interaction diagram of a HARQ-ACK feedback information transmission method according to an embodiment of the present invention.

The method shown in FIG. 5 is applied to the application scenario shown in FIG. 2a or FIG. 2b, and is implemented through interaction between a terminal device and a base station.

The interaction procedure includes the following.

Part 500: The base station sends a simultaneous transmission configuration indication to the terminal device.

In an example, the processor 403 of the base station 400 shown in FIG. 4 may perform part 500 by using the transmitter 404.

The simultaneous transmission configuration indication may be used to instruct to transmit a plurality of pieces of downlink HARQ-ACK feedback information for a plurality of HARQ processes on a same time-frequency resource simultaneously.

It should be noted that, unless otherwise specified, a HARQ process in the present invention is a downlink HARQ process. Specifically, each downlink HARQ process may be used to transmit downlink data for initial transmission, or may be used to transmit data for retransmission.

In an example, the simultaneous transmission configuration indication may be carried by using one or more pieces of Radio Link Control RRC common signaling, RRC specific signaling, or Media Access Control MAC control element CE signaling.

Part 501: The base station sends DCI for each of a plurality of HARQ processes to the terminal device.

Specifically, using two downlink HARQ processes in an NB-IoT system as an example, the base station may send respective downlink DCI for the two downlink HARQ processes to an MTC device.

Using an i^{th} HARQ process in the plurality of HARQ processes as an example, DCI corresponding to the i^{th} HARQ process includes an index number (also referred to as a process number) of the HARQ process, and first time-frequency resource scheduling information and second time-frequency resource scheduling information that correspond to the index number.

A quantity of the plurality of HARQ processes may be notified by using one or more pieces of Radio Link Control RRC common signaling, RRC specific signaling, Media Access Control MAC control element CE signaling, and physical layer control information DCI; or a fixed value specified in a protocol. For example, the fixed value is 8.

The first time-frequency resource scheduling information is used to indicate a time-frequency resource for receiving downlink data for the i^{th} HARQ process.

The second time-frequency resource scheduling information is used to indicate a time-frequency resource for transmitting downlink HARQ-ACK feedback information for the i^{th} HARQ process.

In an LTE system or the like, a time-frequency resource may be an RE (Resource Element). An RE is the smallest time-frequency resource unit in LTE, occupies one subcarrier in frequency domain, and occupies one OFDM symbol in time domain.

In the NB-IoT system, a time-frequency resource for downlink data may also be an RE. An RE is the smallest time-frequency resource unit in the NB-IoT, occupies one subcarrier in frequency domain, and occupies one OFDM symbol in time domain. A bandwidth of a downlink subcarrier is 15 kHz.

In the NB-IoT system, downlink HARQ-ACK feedback information is transmitted by using an NPUSCH format 2, and a bandwidth of a subcarrier in the NPUSCH format 2 may be 3.75 kHz or 15 kHz. The smallest scheduling resource unit in the NPUSCH format 2 is an RU (Resource Unit). An RU occupies one subcarrier in frequency domain, and occupies four consecutive timeslots in time domain. For a subcarrier of 15 kHz, there are seven SC-FDMA symbols in each timeslot, and for a subcarrier of 3.75 kHz, there are seven SC-FDMA symbols and one GP (Guard period) in each timeslot.

Specifically, using the NB-IoT as an example, any piece of the foregoing downlink DCI further includes an identifier for distinguishing between a format N3 and a format N4, an NPDCCH order identifier (the field indicates that current DCI is used to trigger the terminal device to initiate random access on a specified NPRACH resource), a scheduling delay, a modulation and coding mechanism, a repetition quantity, a new data indication, a DCI subframe repetition quantity, and the like.

It should be noted that, the format N3 indicates that the DCI is NB-IoT uplink DCI, and the format N4 indicates that the DCI is NB-IoT downlink DCI. This is because the terminal obtains the DCI through blind detection at an NPDCCH resource position, and to reduce complexity, when uplink and downlink DCI are designed, it is ensured to the greatest extent that bit widths of the uplink and downlink DCI are the same. Therefore, an identifier is required to distinguish between the uplink and downlink DCI.

In this part, the DCI for the plurality of HARQ processes is sent separately. This follows an existing sending manner of DCI for a plurality of HARQ processes.

In addition, in another embodiment of the present invention, the downlink DCI corresponding to the i^{th} HARQ process may further carry the simultaneous transmission configuration indication mentioned in part 500. To be specific, the simultaneous transmission configuration indication is not sent separately. The simultaneous transmission configuration indication is carried by using the DCI, to occupy no additional time-frequency resources.

In an example, the processor 403 of the base station 400 shown in FIG. 4 may perform part 501 by using the transmitter 404.

Part 502: The terminal device monitors to the downlink DCI for each HARQ process.

It should be noted that, the terminal device may monitor to and obtain the downlink DCI for each HARQ process, or may not monitor to and obtain the downlink DCI for one or more of the HARQ processes.

Specifically, using two downlink HARQ processes in the NB-IoT system as an example, the MTC device may monitor to respective downlink DCI for the two downlink HARQ processes in an NPDCCH search space.

In an example, the processor 380 of the terminal device 300 shown in FIG. 3 may perform part 502 in coordination with another component (such as the RF circuit 310).

Part 503: The terminal device receives downlink data based on first time-frequency resource scheduling information corresponding to each HARQ process, completes decoding and check of the received downlink data, and obtains downlink HARQ-ACK feedback information for each HARQ process based on a check result.

Specifically, using two downlink HARQ processes in the NB-IoT system as an example, assuming that downlink HARQ-ACK feedback information for one of the HARQ processes is *b₀*, and downlink HARQ-ACK feedback information for the other HARQ process is *b₁*, the terminal device may obtain *b₀* and *b₁*.

The check is usually CRC (Cyclic Redundancy Check, cyclic redundancy check), and is used to detect whether there is an error in the received downlink data. If no error is detected, an ACK (Acknowledgement, positive acknowledgement) should be fed back subsequently; or if an error is detected, a NACK (Negative Acknowledgement, negative acknowledgement) should be fed back subsequently.

If DCI for a HARQ process is lost, the terminal device may feed back a NACK.

If DCI for all HARQ processes is lost, the terminal device cannot learn of a time-frequency resource for transmitting downlink HARQ-ACK feedback information for any HARQ process, and the terminal device performs no transmission operation.

More specifically, using the i^{th} HARQ process in the plurality of HARQ processes as an example, the downlink HARQ-ACK feedback information for the i^{th} HARQ process may be an ACK or a NACK.

In an example, the processor 380 of the terminal device 300 shown in FIG. 3 may perform part 503 in coordination with another component (such as the RF circuit 310).

Part 504: The terminal device transmits the plurality of pieces of downlink HARQ-ACK feedback information for the plurality of HARQ processes on a same time-frequency resource simultaneously.

In an example, the processor 380 of the terminal device 300 shown in FIG. 3 may perform part 504 in coordination with another component (such as the RF circuit 310).

The terminal device may perform transmission on an uplink data channel or an uplink control channel.

The uplink data channel may be a PUSCH (physical downlink shared channel, physical downlink shared channel), an NPUSCH, or the like. The uplink control channel may be a PUCCH (physical downlink control channel, physical downlink control channel), an NPUCCH, or the like.

In an example, the terminal device may modulate the plurality of pieces of downlink HARQ-ACK feedback information, to obtain a modulation symbol, and transmit the modulation symbol on the same time-frequency resource. Certainly, before the modulation, the plurality of pieces of downlink HARQ-ACK feedback information may be further encoded and scrambled.

More specifically, the plurality of pieces of downlink HARQ-ACK feedback information are sorted according to a preset arrangement rule.

A person skilled in the art may flexibly design the preset arrangement rule as required. For example, the preset arrangement rule may be designed to include: performing arrangement in ascending order or descending order of the index numbers of the HARQ processes.

Using two downlink HARQ processes in the NB-IoT system as an example, assuming that an index number of a HARQ process 0 is 0, downlink HARQ-ACK feedback information for the HARQ process 0 is *b₀*, an index number of a HARQ process 1 is 1, and downlink HARQ-ACK feedback information for the HARQ process 1 is *b₁*, a result of sorting in ascending order is *b₀b₁*, and a result of sorting in descending order is *b₁b₀.*

Alternatively, the preset arrangement rule may be set to include: performing arrangement in any one of full permutations of the index numbers of the HARQ processes. Using three HARQ processes as an example, assuming that an index number of a HARQ process 0 is 0, downlink HARQ-ACK feedback information for the HARQ process 0 is *c₀*, an index number of a HARQ process 1 is 1, downlink HARQ-ACK feedback information for the HARQ process 1 is *c₁*, an index number of a HARQ process 2 is 2, and downlink HARQ-ACK feedback information for the HARQ process 2 is *c₂*, arrangement is performed in any one of full permutations {*c₀c₁c₂, c₀c₂c₁*, *c₁c₀c₂*, *c₁c₂c₀*, *c₂c₀c₁*, *c₂c₁c₀*} of *c₀*, *c₁*, and *c₂*.

Alternatively, the preset arrangement rule may be set to include: performing arrangement based on parity of the index numbers of the HARQ processes, where an odd number is ranked before or after an even number, and the like. This is not specifically limited in the present invention.

The preset arrangement rule may be a rule formulated in a standard protocol, or may be a rule self-defined by an operator or a vendor, provided that it can be ensured that the base station and the terminal device both use a same preset arrangement rule.

For the two downlink HARQ processes, a modulation scheme may be QPSK (Quadrature Phase Shift Keying, quadrature phase shift keying), binary ASK (Amplitude Shift Keying, amplitude shift keying), binary FSK (Frequency Shift Keying, frequency shift keying), or the like.

An example in which an ACK is encoded into binary 1, and a NACK is encoded into binary 1 is used. Before the modulation, the downlink HARQ-ACK feedback information for the two downlink HARQ processes occupies two bits (bit) in total, and needs to be carried by using two different RE resources, and after modulation using QPSK/binary ASK/binary FSK, may be modulated into one QPSK/binary ASK/binary FSK symbol. The downlink HARQ-ACK feedback information for the two HARQ processes may be carried by using one RE resource.

When a quantity of processes is greater than 2, the modulation scheme may be another modulation scheme, for example, a modulation scheme in which a modulation order is the same as the quantity of processes. For example, for three HARQ processes, the modulation scheme may be 8PSK, 8ASK, or 8PSK, and the modulation order is 3 and is the same as a quantity of the HARQ processes; and for N HARQ processes, the modulation scheme is MPSK, MASK, or MPSK, M=2^{N}, and the modulation order is N and is the same as a quantity of the HARQ processes.

The plurality of pieces of downlink HARQ-ACK feedback information are modulated to obtain the modulation symbol, so that a total time of sending the downlink HARQ-ACK feedback information can be reduced, and power consumption and a power loss can be reduced with the reduction of the total time, thereby reducing a quantity of times that the terminal device feeds back the downlink HARQ-ACK feedback information, and further reducing power consumption and a power loss of the terminal device.

It should be noted that, the same time-frequency resource is determined based on time-frequency resources for transmitting the downlink HARQ-ACK feedback information for the HARQ processes.

In an example, the same time-frequency resource is determined in the following manner:
selecting a frequency domain resource position for transmitting downlink HARQ-ACK feedback information for a first target HARQ process, as a frequency domain resource position of the same time-frequency resource; and
is specified by the DCI for each HARQ process. In smitting downlink HARQ-ACK feedback information for a second target HARQ process, as a time domain resource position of the same time-frequency resource, where
the first target HARQ process and the second target HARQ process are HARQ processes in the plurality of HARQ processes; and the first target HARQ process and the second target HARQ process may be different HARQ processes, or the first target HARQ process and the second target HARQ process may be a same HARQ process.

Using two downlink HARQ processes in the NB-IoT system as an example, if DCI for the two HARQ processes indicates a same time-frequency resource for transmitting downlink HARQ-ACK feedback information, the modulation symbol is transmitted on a time-frequency resource for transmitting downlink HARQ-ACK feedback information for either of the HARQ processes.

If the DCI for the two HARQ processes indicates a same frequency domain resource position and different time domain resource positions for transmitting the downlink HARQ-ACK feedback information, an earlier or later time domain position may be selected based on a chronological order of the two time domain resource positions, to send the modulation symbol.

If the DCI for the two HARQ processes indicates different time domain resource positions and a same frequency domain resource position for transmitting the downlink HARQ-ACK feedback information, one of the frequency domain positions may be selected to send the modulation symbol.

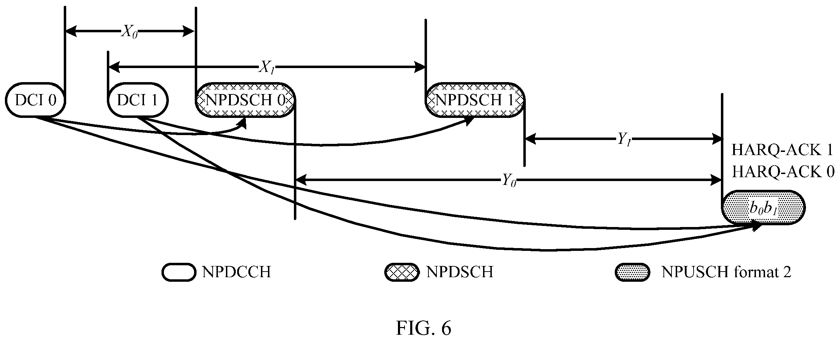

FIG. 6 is an example diagram of scheduling when DCI for two processes indicates a same time-frequency resource for transmitting downlink HARQ-ACK feedback information.

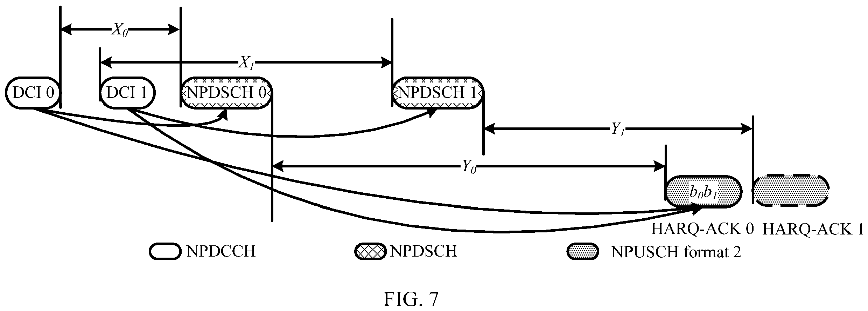

FIG. 7 is an example diagram of scheduling when DCI for two processes indicates a same time-frequency resource and different frequency domain resources for transmitting downlink HARQ-ACK feedback information.

In FIG. 6 and FIG. 7, X0 indicates a scheduling delay of downlink data corresponding to a first process, X1 indicates a scheduling delay of downlink data corresponding to a second process, Y0 indicates a timing offset of downlink HARQ-ACK feedback information corresponding to the first process relative to the downlink data for the first process, Y1 indicates a timing offset of downlink HARQ-ACK feedback information for the second process relative to the downlink data for the second process, a HARQ-ACK 0 indicates a time-frequency position for transmitting the downlink HARQ-ACK feedback information that is indicated by DCI for the first HARQ process, and a HARQ-ACK 1 indicates a time-frequency position for transmitting the downlink HARQ-ACK feedback information that is indicated by DCI for the second process.

Certainly, the DCI for the two HARQ processes may also indicate different time domain resource positions and different frequency domain resource positions for transmitting the downlink HARQ-ACK feedback information. For example, if a time domain resource position for the process 0 is A0, a frequency domain resource position for the process 0 is B0, a time domain resource position for the process 1 is A1, and a frequency domain resource position for the process 1 is B1, one of four combinations, namely, A0B0, A0B1, A1B0, and A1B1 may be selected as a time-frequency resource for transmitting the modulation symbol.

Part 505: The base station receives the plurality of pieces of downlink HARQ-ACK feedback information for the plurality of HARQ processes on the same time-frequency resource simultaneously.

More specifically, the base station receives the modulation symbol on the same time-frequency resource, and demodulates the modulation symbol to obtain the plurality of pieces of downlink HARQ-ACK feedback information.

In an example, the processor 403 of the base station 400 shown in FIG. 4 may perform part 505 in coordination with another component (such as the receiver 401, the demodulator 402, or a decoder 407).

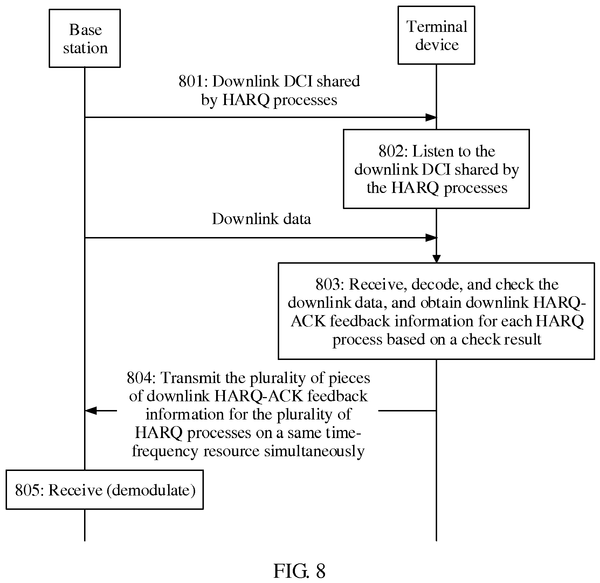

FIG. 8 is another example schematic interaction diagram of a HARQ-ACK feedback information transmission method according to an embodiment of the present invention.

The method shown in FIG. 8 is applied to the application scenario shown in FIG. 2a or FIG. 2b, and is implemented through interaction between a terminal device and a base station.

The interaction procedure includes the following.

Part 801: The base station sends, to the terminal device, DCI shared by a plurality of HARQ processes.

In an example, the processor 403 of the base station 400 shown in FIG. 4 may perform part 801 by using the transmitter 404.

A difference from the embodiment shown in FIG. 5 lies in that, in this embodiment, the plurality of HARQ processes correspond to a same piece of DCI. In this way, resources occupied for sending time-frequency resource scheduling information for the plurality of HARQ processes can be reduced.

In an example, the shared DCI carries a simultaneous transmission configuration indication, an index number of each of the plurality of HARQ processes, and first time-frequency resource scheduling information and second time-frequency resource scheduling information that correspond to the index number.

In another example, the shared DCI carries a simultaneous transmission configuration indication, a start index number of the plurality of HARQ processes, and first time-frequency resource scheduling information and second time-frequency resource scheduling information that correspond to each of the plurality of HARQ processes.

The start index number corresponds to one of the HARQ processes.

For example, it is assumed that there are four HARQ processes in total, and DCI shared by the four HARQ processes carries only a start index number. Assuming that the start index number is 00, the start index number is used as an index number of a zeroth process in the four HARQ processes, and index numbers of the other HARQ processes may be calculated based on the start index number.

A calculation manner may be a progressive increase manner, a progressive decrease manner, or the like. Using the progressive increase manner as an example, if the start index number is 00, 01 may be used as an index number of a first process, 10 may be used as an index number of a second process, and 11 may be used as an index number of a third process.

For related descriptions of the first time-frequency resource scheduling information and the second time-frequency resource scheduling information, refer to part 501 in this specification, and details are not described herein again.

In this embodiment, the simultaneous transmission configuration indication is carried by using the shared DCI, to occupy no additional time-frequency resources. Certainly, in another embodiment of the present invention, the base station may also send the simultaneous transmission configuration indication separately.

For related descriptions of the simultaneous transmission configuration indication, refer to part 500 in this specification, and details are not described herein again.

Part 802: The terminal device monitors to the shared DCI.

Specifically, using two downlink HARQ processes in an NB-IoT system as an example, an MTC device may monitor to shared downlink DCI in an NPDCCH search space.

It should be noted that, the terminal device may monitor to and obtain the shared DCI, or may not monitor to and obtain the shared DCI.

In an example, the processor 380 of the terminal device 300 shown in FIG. 3 may perform part 802.

Part 803 to part 805 are the same as part 503 to part 505, and details are not described herein again.

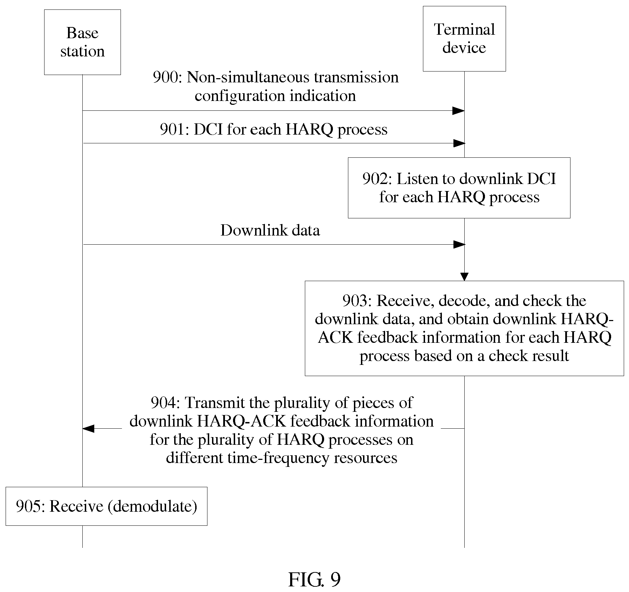

FIG. 9 is still another example schematic interaction diagram of a HARQ-ACK feedback information transmission method according to an embodiment of the present invention.

It should be noted that, the embodiment shown in FIG. 9 may be understood as a branch of the procedure of the HARQ-ACK feedback information transmission method provided in the embodiments of the present invention, and the embodiment shown in FIG. 5 or FIG. 8 may be understood as another branch of the procedure of the HARQ-ACK feedback information transmission method provided in the embodiments of the present invention.

The method shown in FIG. 9 is applied to the application scenario shown in FIG. 2a or FIG. 2b, and is implemented through interaction between a terminal device and a base station.

The interaction procedure includes the following.

Part 900: The base station sends a non-simultaneous transmission configuration indication to the terminal device.

In an example, the processor 403 of the base station 400 shown in FIG. 4 may perform part 900 by using the transmitter 404.

The non-simultaneous transmission configuration indication may be used to instruct not to transmit a plurality of pieces of downlink HARQ-ACK feedback information for a plurality of HARQ processes on a same time-frequency resource simultaneously (or used to instruct to transmit a plurality of pieces of downlink HARQ-ACK feedback information for a plurality of HARQ processes independently).

In an example, the non-simultaneous transmission configuration indication may be carried by using one or more pieces of Radio Link Control RRC common signaling, RRC specific signaling, Media Access Control MAC control element CE signaling, or physical layer control information DCI.

The simultaneous transmission configuration indication used in the embodiment shown in FIG. 5 or FIG. 8, and the non-simultaneous transmission configuration indication in this embodiment may occupy a same field or a same bit of RRC common signaling, RRC specific signaling, MAC CE signaling, or DCI. Different values of the field or the bit may respectively represent the simultaneous transmission configuration indication and the non-simultaneous transmission configuration indication.

For example, if the value of the field or the bit is 1, it represents the simultaneous transmission configuration indication, and if the value is 0, it represents the non-simultaneous transmission configuration indication.

Part 901: The base station sends DCI for each of a plurality of HARQ processes to the terminal device.

Part 901 is the same as part 501, and details are not described herein again.

It should be noted that, in another embodiment of the present invention, downlink DCI corresponding to an i^{th} HARQ process may further carry the non-simultaneous transmission configuration indication mentioned in part 900. To be specific, the non-simultaneous transmission configuration indication is not sent separately. Carrying the non-simultaneous transmission configuration indication by using the DCI has an advantage of occupying no additional time-frequency resources.

Part 902 and part 903 are the same as part 502 and part 503, and details are not described herein again.

Part 904: The terminal device feeds back downlink HARQ-ACK feedback information based on a time-frequency resource that is for transmitting the downlink HARQ-ACK feedback information and that is indicated by the DCI for each HARQ process.

To be specific, in this embodiment, because the base station delivers the non-simultaneous transmission configuration indication, the plurality of pieces of HARQ-ACK feedback information are transmitted on different time-frequency resources.

In an example, using two downlink HARQ processes in an NB-IoT system as an example, the base station may modulate downlink HARQ-ACK feedback information for each HARQ process by using a modulation scheme of BPSK, to obtain a BPSK modulation symbol, and transmit the BPSK modulation symbol for each HARQ process based on second time-frequency resource scheduling information corresponding to the process.

Certainly, if DCI for a HARQ process is lost, the terminal device does not send downlink HARQ-ACK feedback information for the HARQ process.

In an example, the processor 380 of the terminal device 300 shown in FIG. 3 may perform part 904 in coordination with another component (such as the RF circuit 310).

Part 905: The base station receives the downlink HARQ-ACK feedback information on the time-frequency resource for transmitting the downlink HARQ-ACK feedback information for each HARQ process.

More specifically, the base station receives the modulation symbol on the time-frequency resource for transmitting the downlink HARQ-ACK feedback information for each HARQ process, and demodulates the modulation symbol, to obtain the downlink HARQ-ACK feedback information for the HARQ process.

With reference to the foregoing embodiment, in a HARQ-ACK feedback information transmission technology provided in the present invention, whether to transmit the plurality of pieces of downlink HARQ-ACK feedback information for the plurality of HARQ processes on a same time-frequency resource position simultaneously may be configured by the base station.

In an example, the base station can flexibly configure, based on a coverage status of the terminal device (or in consideration of another condition), whether to perform simultaneous transmission at a same time-frequency resource position, to ensure reliability of the downlink HARQ-ACK feedback information.

Using two downlink HARQ processes in the NB-IoT system as an example, for a terminal device in poor coverage, lower order modulation (such as BPSK) achieves more robust performance than higher order modulation (such as QPSK). In this case, the base station may configure separate transmission of downlink HARQ-ACK feedback information for a plurality of processes of the terminal device, to ensure transmission reliability of the downlink HARQ-ACK feedback information. For a terminal device in good coverage, the base station may configure simultaneous transmission of downlink HARQ-ACK feedback information for a plurality of processes of the terminal device, to reduce a quantity of times that the terminal device in good coverage transmits the downlink HARQ-ACK feedback information, thereby reducing power consumption and increasing a data rate.

The solutions provided in the embodiments of the present invention are described above mainly from a perspective of interaction between the apparatuses. It may be understood that, the apparatuses such as the terminal device and the base station include corresponding hardware structures and/or software modules for performing various functions, to implement the foregoing functions. A person skilled in the art should easily be aware that, in combination with the examples described in the embodiments disclosed in this specification, units and algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

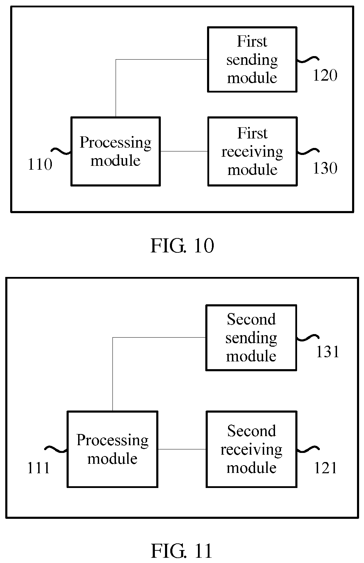

FIG. 10 is a possible schematic structural diagram of the terminal device in the foregoing embodiment. The terminal device includes a processing module 110 and a first sending module 120.

The processing module 110 may be configured to: obtain downlink HARQ-ACK feedback information for each of the plurality of HARQ processes, and instruct the first sending module to transmit the plurality of pieces of obtained downlink HARQ-ACK feedback information for the plurality of HARQ processes on a same time-frequency resource simultaneously.

The first sending module 120 may be configured to transmit the plurality of pieces of downlink HARQ-ACK feedback information on the same time-frequency resource simultaneously according to the instruction of the processing module 110.

For related descriptions, refer to the method part in this specification, and details are not described herein again.

In another embodiment of the present invention, the processing module 110 may be further configured to:
before obtaining the downlink HARQ-ACK feedback information for each of the plurality of HARQ processes, monitor to downlink control information DCI for each HARQ process, where

DCI corresponding to an i^{th} HARQ process includes an index number of the i^{th} HARQ process and time-frequency resource scheduling information corresponding to the index number, and the time-frequency resource scheduling information is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

For related descriptions, refer to the method part in this specification, and details are not described herein again.

In another embodiment of the present invention, the processing module 110 may be further configured to:
before obtaining the downlink HARQ-ACK feedback information for each of the plurality of HARQ processes, monitor to downlink control information DCI shared by the plurality of HARQ processes, where
the DCI carries an index number of each of the plurality of HARQ processes and time-frequency resource scheduling information corresponding to the index number; or the DCI carries time-frequency resource scheduling information corresponding to each of the plurality of HARQ processes and a start index number of the plurality of HARQ processes, and the start index number corresponds to one of the HARQ processes;
time-frequency resource scheduling information corresponding to an i^{th} HARQ process is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

For related descriptions, refer to the method part in this specification, and details are not described herein again.

In another embodiment of the present invention, the DCI monitored to by the processing module 110 further carries a simultaneous transmission configuration indication.

The simultaneous transmission configuration indication is used to instruct to transmit the plurality of pieces of downlink HARQ-ACK feedback information for the plurality of HARQ processes on the same time-frequency resource simultaneously.

For related descriptions, refer to the method part in this specification, and details are not described herein again.

In another embodiment of the present invention, the DCI monitored to by the processing module 110 may further carry a non-simultaneous transmission configuration indication. For related descriptions, refer to the method part in this specification, and details are not described herein again.

Alternatively, the simultaneous transmission configuration indication or the non-simultaneous transmission configuration indication may be sent by a base station separately. Still referring to FIG. 10, the terminal device further includes a first receiving module 130, configured to: before the processing module 110 monitors to the DCI, receive the simultaneous transmission configuration indication or the non-simultaneous transmission configuration indication.

The processing module 110 may be configured to: perform part 502 and part 503 (decoding, checking, and obtaining downlink HARQ-ACK feedback information for each HARQ process based on a check result) in the embodiment shown in FIG. 5, and instruct the first sending module 120 to complete part 504; may further perform part 802 and part 803 (decoding, checking, and obtaining downlink HARQ-ACK feedback information for each HARQ process based on a check result) in the embodiment shown in FIG. 8, and instruct the first sending module 120 to complete part 804; and perform part 902 and part 903 (decoding, checking, and obtaining downlink HARQ-ACK feedback information for each HARQ process based on a check result) in the embodiment shown in FIG. 9, and instruct the first sending module 120 to complete part 904.

The first sending module 120 may be configured to perform part 504 shown in FIG. 5, and may further perform part 804 in the embodiment shown in FIG. 8, and part 904 in the embodiment shown in FIG. 9.

The first receiving module 130 may be configured to perform part 503 (receiving downlink data) in the embodiment shown in FIG. 5, part 803 (receiving downlink data) in the embodiment shown in FIG. 8, and part 903 (receiving downlink data) in the embodiment shown in FIG. 9, and is configured to receive the simultaneous transmission configuration indication or the non-simultaneous transmission configuration indication in the embodiments shown in FIG. 5, FIG. 8, and FIG. 9.

FIG. 11 is a possible schematic structural diagram of the base station in the foregoing embodiment. The base station includes a processing module 111 and a second receiving module 121.

The processing module 111 may be configured to instruct the second receiving module 121 to receive a plurality of pieces of downlink HARQ-ACK feedback information for a plurality of HARQ processes on a same time-frequency resource simultaneously.

The second receiving module 121 is configured to receive the plurality of pieces of downlink HARQ-ACK feedback information on the same time-frequency resource simultaneously according to the instruction of the processing module 111.

The plurality of pieces of downlink HARQ-ACK feedback information are obtained and sent by a terminal device.

In another embodiment of the present invention, still referring to FIG. 11, the base station may further include a second sending module 131.

The processing module 111 is further configured to: before the second receiving module 121 receives the plurality of pieces of downlink HARQ-ACK feedback information, instruct the second sending module 131 to send downlink DCI for each of the plurality of HARQ processes to the terminal device, or instruct the second sending module 131 to send, to the terminal device, downlink DCI shared by the HARQ processes.

The second sending module 131 is configured to send the downlink DCI for each of the plurality of HARQ processes to the terminal device, or send, to the terminal device, the downlink DCI shared by the HARQ processes according to the instruction of the processing module 111

For related descriptions of the DCI, refer to the foregoing records in this specification, and details are not described herein again.

In another embodiment of the present invention, the DCI sent by the second sending module 131 further carries a simultaneous transmission configuration indication; and the simultaneous transmission configuration indication is used to instruct to transmit the plurality of pieces of downlink HARQ-ACK feedback information for the plurality of HARQ processes on the same time-frequency resource simultaneously.

In another embodiment of the present invention, the DCI sent by the second sending module 131 may further carry a non-simultaneous transmission configuration indication. For related descriptions, refer to the method part in this specification, and details are not described herein again.

Alternatively, the processing module 111 may instruct the second sending module 131 to send the simultaneous transmission configuration indication or the non-simultaneous transmission configuration indication separately.

The processing module 111 may instruct the second sending module 131 to complete part 500 and part 501 in the embodiment shown in FIG. 5, instruct the second sending module 131 to send downlink data, and instruct the second receiving module 121 to perform a receiving operation in part 505. The processing module 111 may further perform operations such as demodulation and decoding in part 505. In addition, the processing module 111 may instruct the second sending module 131 to complete part 801 in the embodiment shown in FIG. 8 and send downlink data, and instruct the second receiving module 121 to perform a receiving operation in part 805. The processing module 111 may further perform operations such as demodulation and decoding in part 805. In addition, the processing module 111 may instruct the second sending module 131 to complete part 900 and part 901 in the embodiment shown in FIG. 9, and send downlink data, and instruct the second receiving module 121 to perform a receiving operation in part 905, and the processing module 111 may further perform operations such as demodulation and decoding in part 905.

The second sending module 131 may be configured to perform part 500 and part 501 shown in FIG. 5, and may further perform part 801 in the embodiment shown in FIG. 8, part 900 and part 901 in the embodiment shown in FIG. 9, and send downlink data in the embodiments shown in FIG. 5, FIG. 8, and FIG. 9.

The second receiving module 121 may be configured to perform part 505 (receiving downlink HARQ-ACK feedback information) in the embodiment shown in FIG. 5, part 805 (receiving downlink HARQ-ACK feedback information) in the embodiment shown in FIG. 8, and part 905 (receiving downlink HARQ-ACK feedback information) in the embodiment shown in FIG. 9.

## Claims

1. A HARQ-ACK feedback information transmission method, wherein the method is applied to a scenario of a plurality of downlink HARQ processes, and the method comprises:
obtaining, by a terminal device, downlink HARQ-ACK feedback information for each of the plurality of HARQ processes; and
transmitting, by the terminal device, the plurality of pieces of downlink HARQ-ACK feedback information for the plurality of HARQ processes on a same time-frequency resource simultaneously.

2. The method according to claim 1, wherein
before the step of obtaining downlink HARQ-ACK feedback information for each of the plurality of HARQ processes, the method further comprises:
monitoring, by the terminal device, to downlink control information DCI for each HARQ process, wherein
DCI corresponding to an i^{th} HARQ process comprises an index number of the i^{th} HARQ process and time-frequency resource scheduling information corresponding to the index number;
the time-frequency resource scheduling information is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

3. The method according to claim 1, wherein before the step of obtaining downlink HARQ-ACK feedback information for each of the plurality of HARQ processes, the method further comprises:
monitoring, by the terminal device, to DCI shared by the plurality of HARQ processes, wherein the DCI carries an index number of each of the plurality of HARQ processes and time-frequency resource scheduling information corresponding to the index number; or the DCI carries time-frequency resource scheduling information corresponding to each of the plurality of HARQ processes and a start index number of the plurality of HARQ processes, and the start index number corresponds to one of the HARQ processes;
time-frequency resource scheduling information corresponding to an i^{th} HARQ process is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

4. The method according to claim 2 or 3, wherein the DCI further carries a simultaneous transmission configuration indication; and the simultaneous transmission configuration indication is used to instruct to transmit the plurality of pieces of downlink HARQ-ACK feedback information for the plurality of HARQ processes on the same time-frequency resource simultaneously.

5. The method according to claim 2 or 3, wherein before the listening to the DCI, the method further comprises:
receiving, by the terminal device, a simultaneous transmission configuration indication, wherein the simultaneous transmission configuration indication is used to instruct to transmit the plurality of pieces of downlink HARQ-ACK feedback information for the plurality of HARQ processes on the same time-frequency resource simultaneously.

6. The method according to any one of claims 1 to 5, wherein the transmitting the plurality of pieces of downlink HARQ-ACK feedback information for the plurality of HARQ processes on a same time-frequency resource simultaneously comprises:
modulating the plurality of pieces of downlink HARQ-ACK feedback information, to obtain a modulation symbol; and
transmitting the modulation symbol on the same time-frequency resource.

7. The method according to claim 6, wherein the plurality of pieces of downlink HARQ-ACK feedback information are sorted according to a preset arrangement rule.

8. The method according to claim 7, wherein the preset arrangement rule comprises: performing arrangement in ascending order or descending order of the index numbers of the HARQ processes.

9. A terminal device, applied to a scenario of a plurality of downlink HARQ processes, and comprising a processing module and a first sending module, wherein
the processing module is configured to: obtain downlink HARQ-ACK feedback information for each of the plurality of HARQ processes, and instruct the first sending module to transmit the plurality of pieces of obtained downlink HARQ-ACK feedback information for the plurality of HARQ processes on a same time-frequency resource simultaneously; and
the first sending module is configured to transmit the plurality of pieces of downlink HARQ-ACK feedback information on the same time-frequency resource simultaneously according to the instruction of the processing module.

10. The terminal device according to claim 9, wherein the processing module is further configured to:
before obtaining the downlink HARQ-ACK feedback information for each of the plurality of HARQ processes, monitor to downlink control information DCI for each HARQ process, wherein
DCI corresponding to an i^{th} HARQ process comprises an index number of the i^{th} HARQ process and time-frequency resource scheduling information corresponding to the index number;
the time-frequency resource scheduling information is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

11. The terminal device according to claim 9, wherein the processing module is further configured to:
before obtaining the downlink HARQ-ACK feedback information for each of the plurality of HARQ processes, monitor to downlink control information DCI shared by the plurality of HARQ processes, wherein the DCI carries an index number of each of the plurality of HARQ processes and time-frequency resource scheduling information corresponding to the index number; or the DCI carries time-frequency resource scheduling information corresponding to each of the plurality of HARQ processes and a start index number of the plurality of HARQ processes, and the start index number corresponds to one of the HARQ processes;
time-frequency resource scheduling information corresponding to an i^{th} HARQ process is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

12. The terminal device according to claim 9 or 11, wherein the DCI monitored to by the processing module further carries a simultaneous transmission configuration indication; and the simultaneous transmission configuration indication is used to instruct to transmit the plurality of pieces of downlink HARQ-ACK feedback information for the plurality of HARQ processes on the same time-frequency resource simultaneously.

13. The terminal device according to claim 9 or 11, further comprising:
a first receiving module, configured to: before the processing module monitors to the DCI, receive a simultaneous transmission configuration indication, wherein the simultaneous transmission configuration indication is used to instruct to transmit the plurality of pieces of downlink HARQ-ACK feedback information for the plurality of HARQ processes on the same time-frequency resource simultaneously.

14. The terminal device according to any one of claims 9 to 13, wherein when instructing the first sending module to transmit the plurality of pieces of obtained downlink HARQ-ACK feedback information for the plurality of HARQ processes on the same time-frequency resource simultaneously, the processing module is specifically configured to:
modulate the plurality of pieces of downlink HARQ-ACK feedback information, to obtain a modulation symbol; and
instruct the first sending module to transmit the modulation symbol on the same time-frequency resource.

15. The terminal device according to claim 14, wherein the plurality of pieces of downlink HARQ-ACK feedback information modulated by the processing module are sorted according to a preset arrangement rule.

16. The terminal device according to claim 14, wherein the preset arrangement rule comprises: performing arrangement in ascending order or descending order of the index numbers of the HARQ processes.

17. A HARQ-ACK feedback information transmission method, wherein the method is applied to a scenario of a plurality of downlink HARQ processes, and the method comprises:
receiving, by a base station, a plurality of pieces of downlink HARQ-ACK feedback information for the plurality of HARQ processes on a same time-frequency resource simultaneously, wherein
the plurality of pieces of downlink HARQ-ACK feedback information are obtained and sent by a terminal device.

18. The method according to claim 17, wherein before the step of receiving a plurality of pieces of downlink HARQ-ACK feedback information for the plurality of HARQ processes, the method further comprises:
sending, by the base station, downlink control information DCI for each of the plurality of HARQ processes to the terminal device, wherein
DCI corresponding to an i^{th} HARQ process comprises an index number of the i^{th} HARQ process and time-frequency resource scheduling information corresponding to the index number;
the time-frequency resource scheduling information is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

19. The method according to claim 17, wherein before the step of receiving a plurality of pieces of downlink HARQ-ACK feedback information for the plurality of HARQ processes, the method further comprises:
sending, by the base station to the terminal device, DCI shared by the plurality of HARQ processes, wherein the DCI carries an index number of each of the plurality of HARQ processes and time-frequency resource scheduling information corresponding to the index number; or the DCI carries time-frequency resource scheduling information corresponding to each of the plurality of HARQ processes and a start index number of the plurality of HARQ processes, and the start index number corresponds to one of the HARQ processes;
time-frequency resource scheduling information corresponding to an i^{th} HARQ process is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

20. The method according to claim 17 or 18, wherein
the DCI further carries a simultaneous transmission configuration indication; and
the simultaneous transmission configuration indication is used to instruct to transmit the plurality of pieces of downlink HARQ-ACK feedback information for the plurality of HARQ processes on the same time-frequency resource simultaneously.

21. The method according to claim 17 or 18, wherein before the sending the DCI, the method further comprises:
sending, by the base station, a simultaneous transmission configuration indication to the terminal device, wherein the simultaneous transmission configuration indication is used to instruct to transmit the plurality of pieces of downlink HARQ-ACK feedback information for the plurality of HARQ processes on the same time-frequency resource simultaneously.

22. A transmission base station, wherein the base station is applied to a scenario of a plurality of downlink HARQ processes, and the base station comprises:
a second receiving module, configured to receive a plurality of pieces of downlink HARQ-ACK feedback information for the plurality of HARQ processes on a same time-frequency resource simultaneously, wherein
the plurality of pieces of downlink HARQ-ACK feedback information are obtained and sent by a terminal device.

23. The base station according to claim 22, further comprising a second sending module, wherein
the second sending module is configured to: before the second receiving module receives the plurality of pieces of downlink HARQ-ACK feedback information for the plurality of HARQ processes, send downlink control information DCI for each of the plurality of HARQ processes to the terminal device, wherein DCI corresponding to an i^{th} HARQ process comprises an index number of the i^{th} HARQ process and time-frequency resource scheduling information for the i^{th} HARQ process that corresponds to the index number; or
the second sending module is configured to: before the second receiving module receives the plurality of pieces of downlink HARQ-ACK feedback information for the plurality of HARQ processes, send, to the terminal device, DCI shared by the plurality of HARQ processes, wherein the DCI shared by the plurality of HARQ processes carries an index number of each of the plurality of HARQ processes and time-frequency resource scheduling information corresponding to the index number; or the DCI shared by the plurality of HARQ processes carries time-frequency resource scheduling information corresponding to each of the plurality of HARQ processes and a start index number of the plurality of HARQ processes, and the start index number corresponds to one of the HARQ processes;
time-frequency resource scheduling information corresponding to an i^{th} HARQ process is used to indicate a time-frequency resource for transmitting downlink HARQ-ACK feedback information for the i^{th} HARQ process; and
the same time-frequency resource is determined based on time-frequency resources for transmitting the downlink HARQ-ACK feedback information for the HARQ processes.

24. The base station according to claim 23, wherein the DCI sent by the second sending module further carries a simultaneous transmission configuration indication; and the simultaneous transmission configuration indication is used to instruct to transmit the plurality of pieces of downlink HARQ-ACK feedback information for the plurality of HARQ processes on the same time-frequency resource simultaneously.

25. The base station according to claim 23, wherein the second sending module is further configured to:
before sending the DCI, send a simultaneous transmission configuration indication to the terminal device, wherein the simultaneous transmission configuration indication is used to instruct to transmit the plurality of pieces of downlink HARQ-ACK feedback information for the plurality of HARQ processes on the same time-frequency resource simultaneously.
